# EUROPEAN PATENT SPECIFICATION

(11) **EP 1 945 492 B1**
(45) Date of publication and mention of the grant of the patent: **21.12.2011**
(21) Application number: 05805754.8
(22) Date of filing: 12.10.2005
(51) Int. Cl.: B62D 1/16, B62D 1/20

(54) **VEHICLE INCLUDING A STERRING COLUMN**
FAHRZEUG MIT EINER LENKSÄULE
VEHICULE COMPRENANT UNE COLONNE DE DIRECTION

(43) Date of publication of application: 23.07.2008
(73) Proprietor: RENAULT TRUCKS, 69800 St Priest (FR)
(72) Inventor: CANTAT, Gilles, F-69800 Saint Priest (FR); HENDRIKS, Jan, 9230 Wetteren (BE)
(74) Representative: Putet, Gilles
(86) International application number: PCT/IB2005/003525
(87) International publication number: WO 2007/042859

(56) References cited:
- WO-A-2004/062981
- AU-B2- 673 962
- PATENT ABSTRACTS OF JAPAN vol. 1999, no. 09, 30 July 1999 (1999-07-30) -& JP 11 115769 A (SUZUKI MOTOR CORP), 27 April 1999 (1999-04-27)
- PATENT ABSTRACTS OF JAPAN vol. 2000, no. 18, 5 June 2001 (2001-06-05) -& JP 06 074246 A (NACAM), 15 March 1994 (1994-03-15)
- PATENT ABSTRACTS OF JAPAN vol. 1996, no. 07, 31 July 1996 (1996-07-31) -& JP 08 074878 A (TOYOTA MOTOR CORP), 19 March 1996 (1996-03-19)
- PATENT ABSTRACTS OF JAPAN vol. 1999, no. 09, 30 July 1999 (1999-07-30) -& JP 11 108076 A (NIPPON SEIKO KK), 20 April 1999 (1999-04-20)
- PATENT ABSTRACTS OF JAPAN vol. 009, no. 139 (M-387), 14 June 1985 (1985-06-14) -& JP 60 018448 A (ISEKI NOKI KK), 30 January 1985 (1985-01-30)
- PATENT ABSTRACTS OF JAPAN vol. 009, no. 268 (M-424), 25 October 1985 (1985-10-25) -& JP 60 113771 A (ISEKI NOKI KK), 20 June 1985 (1985-06-20)

## Description

### Field of the invention

The present invention relates to an automotive vehicle, especially an industrial vehicle of the cab over engine type that includes a steering wheel.

### Technological background

In most countries, the overall length of the industrial vehicles such as trucks authorized to run on public roads is limited.

One of the consequences of this legal requirement is that the vehicle cabin, that is to say the section of the vehicle where the driver is placed is usually located above the power train. This disposition makes it possible to maximize the load which can be carried by the vehicle and can be found on many straight trucks or road tractors which tow a semi-trailer or a trailer.

This is also why the front face of many industrial vehicles can be almost vertical; this is again to maximize the part of the vehicle length devoted to the on board load. Vehicles of this type are sometimes referred to as cab-over-engine vehicles or flat-nose-cab vehicles.

In this respect the architecture of an industrial vehicle can differ substantially from the architecture of a personal vehicle such as a motor car where the power train section is usually located in front of the cabin.

The specific architecture of an industrial vehicle means that a vehicle steering wheel is almost directly above a vehicle steering gear i.e. the mechanical device for converting the rotational motion of the steering wheel into a linear motion of a steering linkage.

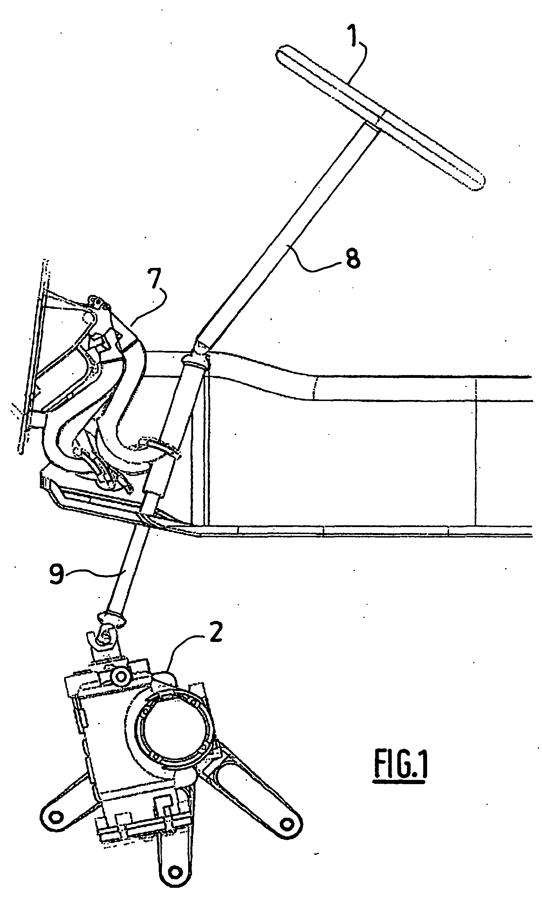

A steering column mechanically links the steering wheel to the steering gear. As this is illustrated on Figure 1, a steering column 1 includes generally two shafts i.e. an input shaft 8 coupled to the steering wheel and an output shaft 9 coupled to a steering gear 2. The shafts are connected to each other by a joint which is generally a universal joint. In some cases, the steering column can include a third shaft which is interposed between the input shaft and the output shaft.

Because of the almost vertical path that the steering column has to follow to mechanically link the steering wheel to the steering gear, the steering column usually passes between a vehicle pedal arrangement 7. In other words, because of the specific architecture of an industrial vehicle, the steering column encroaches upon the cabin as this is illustrated by Figure 1.

This disposition which is common to many industrial vehicles as for example shown in JP 60018448 and in JP03271072 is not desirable from many standpoints.

First of all, having the steering column passing between the vehicle pedal arrangement (clutch pedal, brake pedal, accelerator) means that the pedals can be too spaced out from each other which is not satisfactory in terms of ergonomics. Additionally, because the steering column intrudes into the cabin, it has to be covered by trim panels which add to the encroachment in the cabin.

The steering column intruding into the vehicle cabin also means that when getting in and out of the cabin, the driver has to deploy extra movements to avoid the steering column. Bearing in mind that in the case of a delivery vehicle from which the driver has to get in and out several times per day, the ergonomic impact on the driver is quite significant.

Figure 1 illustrates a typical vehicle that has a steering column which includes on input shaft coupled to a vehicle steering wheel and an output shaft coupled to a vehicle steering gear. As this is clearly shown on this Figure, the steering column passes in the middle of the vehicle pedal arrangement.

Another weakness of the current steering columns lies in the fact that the angular scope according to which the steering wheel can be tilted is very limited. As mentioned above, a steering column includes two or three shafts generally coupled by universal joints. Therefore, the steering wheel can only be angularly adjusted within the allowed angle of the universal joint which couples the input shaft to the next shaft; this angle is limited because it is essential to keep the homokinetic property of the steering column that is to say the steering column, capability to transmit an angular speed regularly and without hard points from the steering wheel to the steering gear through non coaxial steering shafts.

Because of this homokinetic requirement, the steering wheel is oriented almost horizontally in most industrial vehicles. This orientation of the steering wheel can be detrimental to driver's comfort especially on a long haul journey where a more vertically oriented steering wheel may be more appropriate to the driver's comfort.

It therefore appears that, from several standpoints, there is room for improvement in industrial vehicles.

### Summary of the invention

It is an object of the present invention to provide an improved vehicle, which can overcome the drawbacks encountered in conventional vehicle.

Another object of the present invention is to provide a vehicle which can effectively improve the cabin ergonomics.

According to the invention such a vehicle has a cabin section positioned substantially above a power train section. The cabin section includes a pedal arrangement. The vehicle also includes a steering column which connects a steering wheel located in the vehicle cabin section to a steering gear located in the vehicle power train section. In said vehicle, the steering wheel is positioned substantially above the steering gear. The steering column comprises an input shaft connected to the steering wheel and an output shaft connected to the steering gear. Furthermore, the input shaft and the output shaft are connected by an upper intermediate shaft and a lower intermediate shaft whereby the steering column extends in front of the vehicle pedal arrangement in the region of said pedal arrangement.

Thus, in a vehicle according to the invention, the steering column can extend in front of the vehicle pedal arrangement, thereby considerably improving the cabin ergonomics. Together with the fact that the steering column can be deviated substantially outside the vehicle cabin, the steering column also ensures a homokinetic transmission of the steering wheel input motion to the steering gear. Taking a three shaft steering column as a reference, the invention, by introducing a fourth shaft in a steering column, makes it possible to authorize the steering column to pass in front of the pedal arrangement; this is being achieved while having a homokinetic motion transmission.

In concrete terms, in a traditional three shaft steering column comprised of an input shaft, an output shaft and a single intermediate shaft, the angle between the intermediate shaft and the output shaft is limited by the angular scope of the universal joint that couples these two shafts; hence, as the upper point of the steering column is substantially directly above the lower point of the steering column, the steering column follows a substantially vertical path which passes in the pedal arrangement; should the intermediate shaft be angled relative to the output shaft in such a way that the steering column would pass in front of the vehicle pedal arrangement - that is to say with an angle that goes toward 90° -, the steering column would be jerky and, in effect, would be far from homokinetic. In contrast, in the steering column according to the invention, the addition of a fourth shaft which can be said to be interposed between the intermediate shaft and the output shaft of a three part steering column, allows to deviate the path of the steering column in front of the pedal arrangement while keeping the homokinetic property of the steering column.

According to a preferred implementation of the invention, the angle formed by the upper intermediate shaft and the lower intermediate shaft is substantially equal to the angle formed by the angle formed by the lower intermediate shaft and the output shaft. This important arrangement of the steeping column ensures that the rotational velocity of the upper intermediate shaft equals substantially the rotational velocity of the output shaft. Concretely, this means that the steering column can follow a path that skirts around the pedal arrangement thanks to the fact that it is comprised of four parts and the part - lower intermediate shaft - which allows this deviation of the steering column acts as a constant velocity joint, thereby ensuring a homokinetic transmission of a steering wheel motion to the steering gear.

Preferably, the lower intermediate shaft is disposed substantially in front of the vehicle pedal arrangement so that the steering column does not interfere with the vehicle pedal arrangement.

In an implementation of the invention, the upper intermediate shaft passes above the pedal arrangement and the output shaft passes below the pedal arrangement, the lower intermediate shaft connecting the upper intermediate shaft and the lower intermediate shaft in front of the pedal arrangement.

According to an embodiment of the invention, the steering column includes a universal joint disposed between the input shaft and the upper intermediate shaft; a universal joint disposed between the upper intermediate shaft and the lower intermediate shaft; a universal joint disposed between the lower intermediate shaft and the output shaft; a universal joint disposed between the output shaft and the steering gear. Thus, the steering column includes standard components:

It is envisaged that the input shaft is supported by a tilt mechanism.

In an advantageous way, the tilt mechanism can allow an angular adjustment of the input shaft relative to the upper intermediate shaft according to a tilt angle α varying between 0° and 20° on both side of the upper intermediate shaft axis. This angular scope offers the driver a wide range of steering wheel positions going from a first extreme position where the steering wheel is angled towards the horizontal, this position being preferred for manoeuvring and to a second extreme position where the steering wheel is angle towards the vertical, this position being preferred for driving. Importantly, this wide angular adjustment of the steering wheel position is obtained while maintaining the homokinetic property of the steering column. This significant result can be achieved thanks to the fact that the steering column is comprised of four parts.

These and other advantages will become apparent upon reading the following description in view of the drawing attached hereto representing, as a non-limiting examples, embodiments of a vehicle according to the invention.

### Brief description of the drawing

The following detailed description of embodiments of the invention is better understood when read in conjunction with the appended drawing being understood, however, that the invention is not limited to the specific embodiments disclosed. In the drawing,
Figure 1 is a side view of a steering column of a vehicle of the prior art,
Figure 2 is a side view of a steering column of a vehicle of according to the invention,
Figure 3 is a front view of a steering column of a vehicle of according to the invention,
Figure 4 is an enlarged view of the steering column taken from the direction of an arrow of Figure 2;
Figure 5 is a perspective view of an industrial vehicle equipped with the steering wheel of the invention,
Figure 6 is a diagram illustrating the operational principle of the steering system,
Figure 7 is a diagram illustrating respectively in dotted line and in continuous line the operational principle of two steering systems of the prior art,
Figure 8 displays graphical representations of a gear ratio in function of a steering angle respectively for a steering system according to the invention and for a steering system according to the prior art.

### Detailed description of the invention

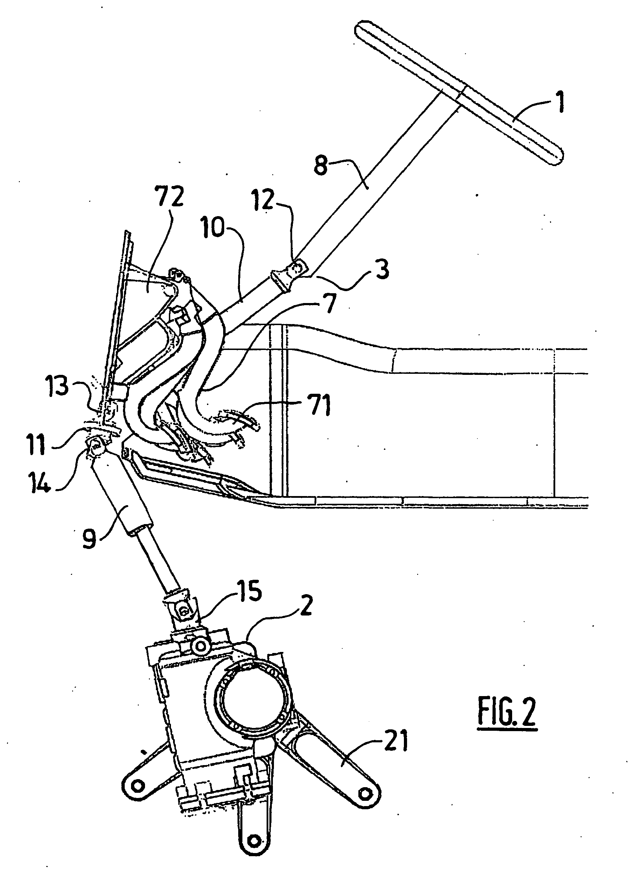

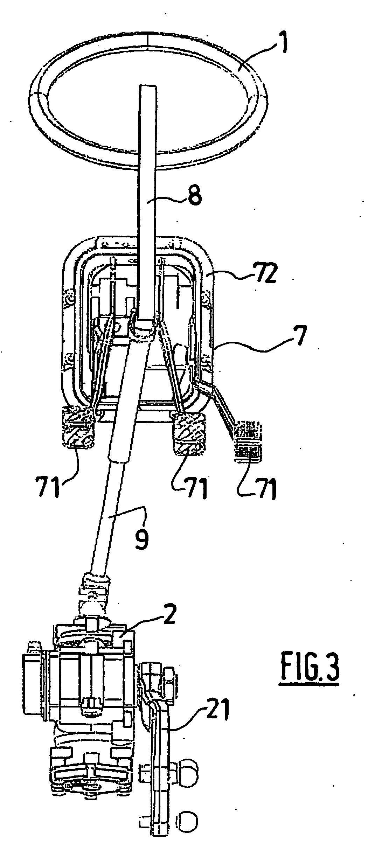

As this is illustrated in Figures 2 to 4, an industrial vehicle includes a steering wheel 1 which can be operated by a driver, a steering gear 2 and a steering column 3 which mechanically couples the steering wheel 1 to the steering gear 2.

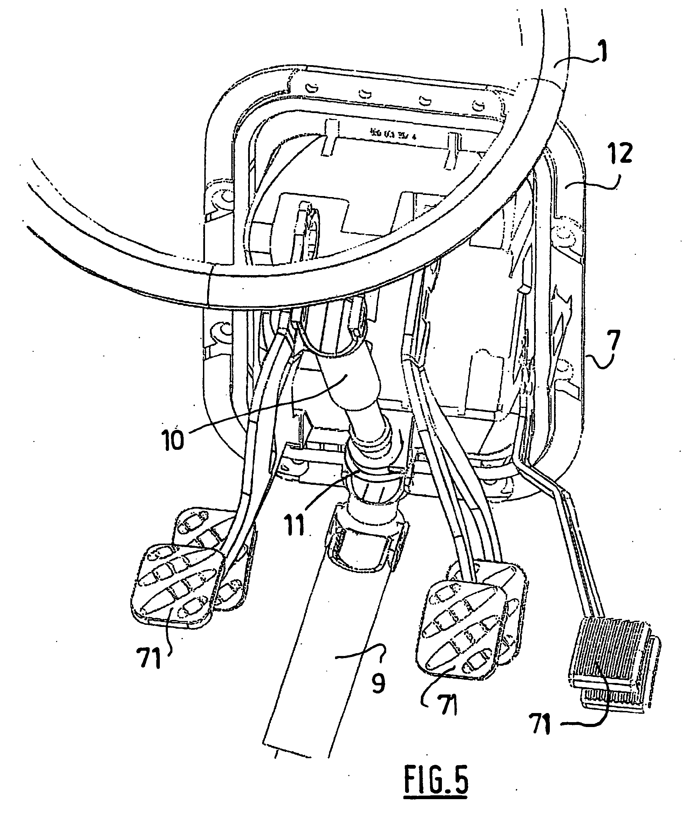

A specificity of a number of industrial vehicles lies in the fact that a vehicle cabin 4 is located over a vehicle power train section which can include, amongst others, a motor, a gear box, a steer axle, one or more radiators and the steering gear 2. Figure 5 illustrates this disposition.

From the cabin 4, a driver can command the course of the vehicle via the steering wheel 1, a pedal arrangement 7 and a gear box stick. It is important that the layout of these equipments is as ergonomic - that is to say adapted to the human body - as possible. This is especially important in the case of an industrial vehicle which is the driver's working environment. The pedal arrangement 7 can include two or three pedals 71 which are articulated on a yoke 72. On the Figures 2 to 4, each pedal 71 is illustrated in its extreme positions.

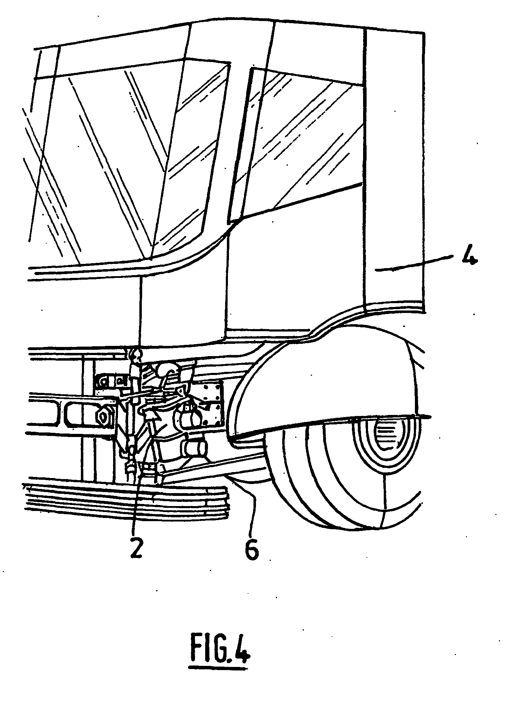

Such vehicle architecture has the advantage of maximizing the space devoted to on board load; but as this appears on Figure 4 the power train section is very densely organized. Because of the number of components (each of them having specific requirements in terms of location or orientation) which are part of the power train section, the steering gear 2 together with a connecting rod 21 have to be placed within the power train section, taking into account all the other vehicle components.

It therefore appears that the position of the steering wheel 1 - for ergonomics reasons - and the position of the steering gear 2 - for mechanical reasons - are set without any possibility to adjust their respective positions with regards to the vehicle cabin 4 and the vehicle power train section 6.

The structure of the steering column 3 is now described with reference to Figures 2 to 4.

In the vehicle according to the invention, the steering column 3 includes four parts namely an input shaft 8 and an output shaft 9 and interposed therebetween two intermediate shafts namely an upper intermediate shaft 10 and a lower intermediate shaft 11.

The input steering shaft 8 which receives the steering wheel 1, is supported by a tilt mechanism known per se which allows a driver to adjust the angular position of the steering wheel in a longitudinal plan according to a tilt angle α. The input shaft 8 can also authorize an axial adjustment of the position of the steering wheel 1 and to this end can suitably be of a telescopic structure. A universal joint 12 couples the input shaft 8 to the upper intermediate shaft 10. The upper intermediate shaft 10 is fixed onto the cabin by a mounting bracket (not shown) which allows a rotation of the upper intermediate shaft 10.

A universal joint 13 couples the upper intermediate shaft 10 to the lower intermediate shaft 11. The lower intermediate shaft 11 is supported onto the cabin by a mounting bracket (not shown) which can for example include a ball joint bearing which maintains the lower intermediate shaft 11 while authorizing a limited tilt movement of the lower intermediate shaft 11 to absorb the angular dispersions of each shaft.

The output shaft 9 links the lower intermediate shaft 11 to the steering gear 2. The output shaft 9 is fixed onto the vehicle power train section by a mounting bracket (not shown). Each end of the output shaft 9 is equipped with a universal joint; a universal joint 14 connects the output shaft 9 to the lower intermediate shaft 11 and a universal joint 15 connects the output shaft 9 to the steering gear 2.

The structure of the steering column 3 can, therefore, include standard components; thus the steering system according to the invention does not induce a significant additional cost. It can be added that the output shaft 9 can be of the telescopic type to allow the cabin to be forwardly tilted to access the vehicle power train section, for example, for servicing.

An important aspect of the invention lies in the implementation of the steering column in the vehicle.

As this is represented on Figure 2, due to the specificity of the cab-over-engine architecture, the steering wheel 1 is placed in a forward position and is located substantially above the steering gear 2 as apposed to a personal vehicle wherein the steering gear is well in front of the steering wheel. For the reasons indicated above, the position of the steering wheel 1 and the position of the steering gear 2 are set according to a number of constraints without any flexibility as far as their location is concerned. A straight line going from the steering wheel 1 to the steering gear 3, which is the most obvious and most simple connection, intrudes considerably into the cabin.

Having the position of the steering wheel 1 and the steering gear 2 as a constraint, the steering column 3 of the invention follows a path which is forwardly offset and, thus, passes in front of the vehicle pedal arrangement.

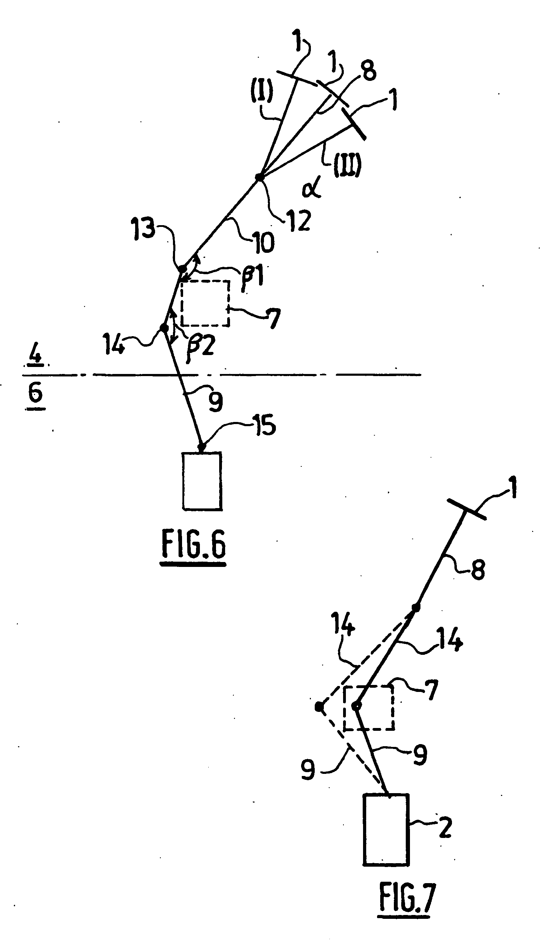

The operation of the steering wheel is now described with reference to Figure 6.

The specific effect of the invention can be well understood when compared with a steering column of the prior art.

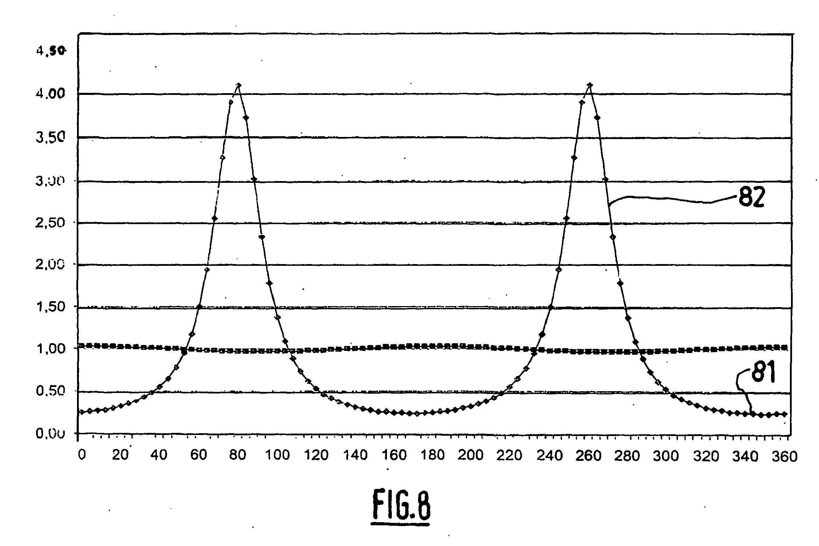

When referring to Figure 7, one can appreciate that a two part steering column - depicted in continuous lines on Figure 7 - does not offer any degree of freedom to pass in front of the vehicle pedal arrangement. A three part steering column as the one depicted in dotted lines on Figure 7, is not a solution to avoid the pedal arrangement 7 either, as the angle formed by the single intermediate shaft 14 and an output shaft 9 cannot be adjusted to pass in front of the steering arrangement 7 and to ensure a homokinetic transmission of the steering movement. With this respect, the dotted curve 81 of Figure 8 which represents the steering ratio against to the angular position of the steering wheel shows clearly that, in the case of a three part steering column wherein the connection point of the single intermediate shaft with the output shaft is forwardly shifted to pass in front of the pedal arrangement, the steering arrangement does not display the required homokinetic property. The curve 81 shows that in this case the steering ratio varies in a cyclical way with the steering wheel angle.

In contrast, in the invention, the upper intermediate shaft 10 and the output shaft 9 can be angled away from the straight line which goes from the centre of the steering wheel 1 to the steering gear 3; this allow the upper intermediate shaft 10 to be angled in such a way that it can pass above the pedal arrangement 7. Figure 6 illustrates clearly this point. The lower intermediate shaft 11 is entirely located in front of the pedal arrangement while the output shaft 9 can be connected to the steering gear while passing below the pedal arrangement 7.

An important point of the steering column according to the invention is that the angle β1 formed by the upper intermediate shaft 10 and the lower intermediate shaft 11 is substantially equal to the angle β2 formed by the lower intermediate shaft 11 and the output shaft 9; this disposition which is only possible with the lower intermediate shaft 11 makes it possible to extend the joint 13 and the joint 14 in front of the pedal arrangement while at the same time ensuring that the rotational velocity of the output shaft 9 remains substantially equal to the rotational velocity of the upper intermediate shaft 10. The continuous curve 82 of Figure 8 shows that the steering ratio remains substantially constant and equal to one, whatever the angular position of the steering wheel.

As a result the steering column 3 can skirt round the pedal arrangement and operates in a homokinetic way.

As this can be seen on the Figures, the lower intermediate shaft 11 is significantly shorter than the other shafts of the steering column; this arrangement is specific to the illustrated embodiment and the lower intermediate 11 can be of any length to suit the specific architecture of a vehicle.

Another significant advantage of the steering system of the invention is that the input shaft 8 can be adjusted according to a wide tilt angle α. The steering system of the invention can authorise an adjustment of the steering wheel position by tilting the input shaft 8 by 20° on both side of the axis of the upper intermediate shaft 10 upon which the input shaft 8 is connected. This angular scope offers the driver a wide range of steering wheel positions. The driver can for example set the steering wheel 1 into a first extreme position I where the steering wheel is angled towards the horizontal; this position is usually preferred for manoeuvring. Alternatively the driver can choose to set the steering wheel into a second extreme II position where the steering wheel is angle towards the vertical; this position is usually preferred for driving as the driver can sit a more comfortable position. Importantly, this wide angular adjustment (up to 40°) of the steering wheel position is obtained while maintaining the homokinetic property of the steering system. This significant result can be achieved thanks to the fact that the steering column 3 is comprised of four parts.

Of course, the invention is not restricted to the embodiment described above by way of non-limiting example, but on the contrary it encompasses all embodiments thereof as defined by the appended claims.

## Claims

1. A cab-over-engine vehicle having a cabin section (4) positioned substantially above a power train section (6), said cabin section (4) including a pedal arrangement (7), and a steering column (3) connecting a steering wheel (1) located in the vehicle cabin section (4), to a steering gear (2) located in the vehicle power train section (6), the steering wheel (1) being positioned substantially above the steering gear (2) as opposed to vehicles wherein the steering gear is well in front of the steering wheel, the steering column (3) comprising an input shaft (8) connected to the steering wheel (1) and an output shaft (9) connected to the steering gear (2), **characterized in that** the input shaft (8) and the output shaft (9) are connected by an upper intermediate shaft (10) and a lower intermediate shaft (11) whereby the steering column (3) extends in front of the vehicle pedal arrangement (7) in the region of said pedal arrangement (7), **in that** the angle formed by the upper intermediate shaft (10) and the lower intermediate shaft (11) is substantially equal to the angle formed by the lower intermediate shaft (11) and the output shaft (9), and **in that** the upper intermediate shaft (10) passes above the pedal arrangement and the output shaft (9) passes below the pedal arrangement, the lower intermediate shaft (11) connecting the upper intermediate shaft (10) and the lower intermediate shaft (11) in front of the pedal arrangement.

2. The vehicle according to claim 1, **characterized in that** the steering column (3) includes a universal joint (12) disposed between the input shaft (8) and the upper intermediate shaft (10), a universal joint (13) disposed between the upper intermediate shaft (10) and the lower intermediate shaft (11), a universal joint (14) disposed between the lower intermediate shaft (11) and the output shaft (9), a universal joint (15) disposed between the output shaft (9) and the steering gear.

3. The vehicle according to claim 1 or 2, **characterized in that** the input shaft (8) is supported by a tilt mechanism.

4. The vehicle according to claim 3, **characterized in that** the tilt mechanism can allow an angular adjustment of the input shaft relative to the upper intermediate shaft according to a tilt angle α varying between 0 and 40".

## Patentansprüche

1. Fahrzeug mit einer Kabine über dem Motor, das einen im Wesentlichen oberhalb eines Antriebsstrangabschnitts (6) angeordneten Kabinenabschnitt (4), wobei der Kabinenabschnitt (4) eine Pedalanordnung (7) umfasst, und eine Lenksäule (3) aufweist, die ein in dem Fahrzeugkabinenabschnitt (4) angeordnetes Lenkrad (1) mit einem Lenkgetriebe (2) verbindet, das in dem Fahrzeugantriebsstrangabschnitt (6) angeordnet ist, wobei das Lenkrad (1) im Wesentlichen oberhalb des Lenkgetriebes (2) angeordnet ist, im Gegensatz zu Fahrzeugen, bei denen das Lenkgetriebe völlig vor dem Lenkrad angeordnet ist, wobei die Lenksäule (3) eine mit dem Lenkrad (1) verbundene Eingangswelle (8) und eine mit dem Lenkgetriebe (2) verbundene Ausgangswelle (9) umfasst, **dadurch gekennzeichnet, dass** die Eingangswelle (8) und die Ausgangswelle (9) durch eine obere Zwischenwelle (10) und eine untere Zwischenwelle (11) verbunden sind, wobei sich die Lenksäule (3) vor der Fahrzeugpedalanordnung (7) in dem Bereich der Pedalanordnung (7) erstreckt, dass der Winkel, der durch die obere Zwischenwelle (10) und die untere Zwischenwelle (11) gebildet wird, im Wesentlichen gleich dem Winkel ist, der durch die untere Zwischenwelle (11) und die Ausgangswelle (9) gebildet wird, und dass die obere Zwischenwelle (10) oberhalb der Pedalanordnung verläuft und die Ausgangswelle (9) unterhalb der Pedalanordnung verläuft, wobei die untere Zwischenwelle (11) die obere Zwischenwelle (10) und die untere Zwischenwelle (11) vor der Pedalanordnung verbindet.

2. Fahrzeug nach Anspruch 1, **dadurch gekennzeichnet, dass** die Lenksäule (3) ein zwischen der Eingangswelle (8) und der oberen Zwischenwelle (10) angeordnetes Kreuzgelenk (12), ein zwischen der oberen Zwischenwelle (10) und der unteren Zwischenwelle (11) angeordnetes Kreuzgelenk (13), ein zwischen der unteren Zwischenwelle (11) und der Ausgangswelle (9) angeordnetes Kreuzgelenk (14) und ein zwischen der Ausgangswelle (9) und dem Lenkgetriebe angeordnetes Kreuzgelenk (15) umfasst.

3. Fahrzeug nach Anspruch 1 oder 2, **dadurch gekennzeichnet, dass** die Eingangswelle (8) durch einen Kippmechanismus gelagert ist.

4. Fahrzeug nach Anspruch 3, **dadurch gekennzeichnet, dass** der Kippmechanismus eine Winkeleinstellung der Eingangswelle relativ zu der oberen Zwischenwelle gemäß einem Kippwinkel α ermöglicht, der zwischen 0 und 40° variiert.

## Revendications

1. Véhicule à cabine avancée comprenant une section cabine (4) positionnée sensiblement au-dessus d'un groupe motopropulseur (6), ladite section cabine (4) comportant un agencement de pédales (7) et une colonne de direction (3) reliant un volant de direction (1) situé dans la section cabine (4) du véhicule, à un boîtier de direction (2) situé dans la section groupe motopropulseur (6) du véhicule, le volant de direction (1) étant positionné sensiblement au-dessus du boîtier de direction (2) contrairement aux véhicules dans lesquels le boîtier de direction est notablement en avant du volant de direction, la colonne de direction (3) comprenant un arbre d'entrée (8) relié au volant de direction (1) et un arbre de sortie (9) relié au boîtier de direction (2), **caractérisé en ce que** l'arbre d'entrée (8) et l'arbre de sortie (9) sont reliés par un arbre intermédiaire supérieur (10) et un arbre intermédiaire inférieur (11) ce par quoi la colonne de direction (3) s'étend en avant de l'agencement de pédales du véhicule (7) dans la région dudit agencement de pédales (7), **en ce que** l'angle formé par l'arbre intermédiaire supérieur (10) et l'arbre intermédiaire inférieur (11) est sensiblement égal à l'angle formé par l'arbre intermédiaire inférieur (11) et l'arbre de sortie (9), et **en ce que** l'arbre intermédiaire supérieur (10) passe au-dessus de l'agencement de pédales et que l'arbre de sortie (9) passe au-dessous de l'agencement de pédales, l'arbre intermédiaire inférieur (11) reliant l'arbre intermédiaire supérieur (10) et l'arbre intermédiaire inférieur (11) en avant de l'agencement de pédales.

2. Véhicule selon la revendication 1, **caractérisé en ce que** la colonne de direction (3) comprend un joint universel (12) disposé entre l'arbre d'entrée (8) et l'arbre intermédiaire supérieur (10), un joint universel (13) disposé entre l'arbre intermédiaire supérieur (10) et l'arbre intermédiaire inférieur (11), un joint universel (14) disposé entre l'arbre intermédiaire inférieur (11) et l'arbre de sortie (9), et un joint universel (15) disposé entre l'arbre de sortie (9) et le boîtier de direction.

3. Véhicule selon les revendications 1 ou 2, **caractérisé en ce que** l'arbre d'entrée (8) est supporté par un mécanisme d'inclinaison.

4. Véhicule selon la revendication 3, **caractérisé en ce que** le mécanisme d'inclinaison peut tolérer un ajustement angulaire de l'arbre d'entrée relativement à l'arbre intermédiaire supérieur, en fonction d'un angle d'inclinaison α variant dans une fourchette de 0 à 40°.
